# EUROPÄISCHE PATENTSCHRIFT

(11) **EP 0 457 057 B1**
(45) Veröffentlichungstag und Bekanntmachung des Hinweises auf die Patenterteilung: **15.09.1993**
(21) Anmeldenummer: 91106406.1
(22) Anmeldetag: 20.04.1991
(51) Int. Cl.: B23Q 35/26, B23Q 35/46

(54) **Abtastvorrichtung sowie Verwendung derselben**
Feeler and use thereof
Palpeur et son usage

(30) Priorität: 16.05.1990 CH 1656/90
(43) Veröffentlichungstag der Anmeldung: 21.11.1991
(73) Patentinhaber: MIKRONA TECHNOLOGIE AG, CH-8957 Spreitenbach (CH)
(72) Erfinder: Eidenbenz, Stefan, CH-8185 Winkel (CH); Nowak, Claude, W-5430 Wettingen (CH)
(74) Vertreter: EGLI-EUROPEAN PATENT ATTORNEYS

(56) Entgegenhaltungen:
- EP-A- 0 402 720
- WO-A-87/06451
- WO-A-88/04158
- DE-A- 932 166
- US-A- 2 883 912
- US-A- 3 570 370

## Beschreibung

Die Erfindung bezieht sich auf eine Abtastvorrichtung gemäss dem Oberbegriff des Anspruchs 1 sowie eine Verwendung derselben.

In der nicht vorveröffentlichten EP-A-402 720 ist eine Abtastvorrichtung beschrieben, bei welcher ein Formkörper einseitig gehaltert ist und mittels eines Stiftes oder einer Scheibe abgetastet wird. Der Taster steuert ein Bearbeitungswerkzeug, das aus einem Rohling eine Kopie des Formkörpers fräst.

Es hat sich herausgestellt, dass bei einer derartigen Abtastvorrichtung die erreichbare Präzision u. U. durch elastische Deformationen des Formkörpers, die von dem vom Taster auf ihn ausgeübten Druck verursacht werden, begrenzt ist.

Der Erfindung liegt die Aufgabe zugrunde, eine gattungsgemässe Abtastvorrichtung zu schaffen, mit der eine noch präzisere Abtastung eines Formkörpers möglich ist.

Diese Aufgabe wird durch die Merkmale im Kennzeichen des Anspruchs 1 gelöst.

Die Vorteile der Erfindung sind vor allem darin zu sehen, dass der Spielraum für elastische Deformationen des Formkörpers wesentlich verkleinert ist, ohne dass die Abtastung behindert wäre.

Im folgenden wird die Erfindung anhand von lediglich ein Ausführungsbeispiel zeigenden Zeichnungen erläutert. Es zeigen
- Fig. 1: eine teilweise angeschnittene Vorderansicht einer erfindungsgemässen Abtastvorrichtung, welche einen Teil einer Kopiervorrichtung bildet,
- Fig. 2: vergrössert einen Draufblick auf einen Taster der Vorrichtung nach Fig. 1,
- Fig. 3a: vergrössert das Endstück eines zweiten Halteteils der Vorrichtung nach Fig. 1 und
- Fig. 3b: das zweite Halteteil nach Fig. 3a, um 90° um seine Achse gedreht.

Die Abtastvorrichtung umfasst einen Arm 1, in dessen Endpartie ein erstes Halteteil 2 gelagert ist. Das erste Halteteil 2 ist in einem Führungsteil 3 axial verschiebbar geführt und durch eine Feder 4 mit einer axial gerichteten Kraft beaufschlagt, gegen die es mittels eines Griffs 5 zurückziehbar ist. Das Führungsteil 3 ist über Kegelzahnräder 6a,b mit einer Welle 7 verbunden, die die Verbindung zu einer mechanisch im wesentlichen analog ausgeführten am gegenüberliegenden Ende des Arms 1 angebrachten Halterung eines zu bearbeitenden Rohlings (nicht dargestellt) bildet.

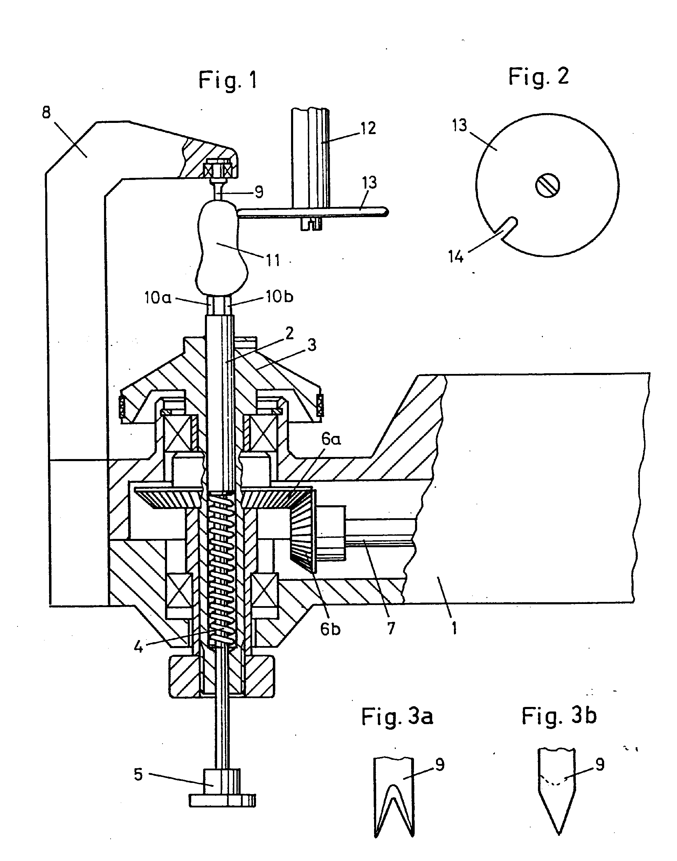

Erfindungsgemäss ist am Ende des Arms 1 ein Bügel 8 angebracht, der ein drehbar gelagertes zweites Halteteil 9 trägt, dessen Endstück, wie aus Fig. 3a, 3b ersichtlich, als in zwei Spitzen auslaufender zylindrischer Stift ausgebildet ist. Das erste Halteteil 2 enthält zwei Endstücke 10a,b, mit jeweils einer Spitze. Zwischen das erste Halteteil 2 und das zweite Halteteil 9 ist ein Formkörper 11 derart eingespannt, dass er von beiden Endstücken 10a,b des ersten Halteteils 2 kontaktiert und damit vollständig fixiert ist.

Zur Abtastung des Formkörpers 11 dient ein als im Mittelpunkt an einer Führung 12 gehalterte Scheibe 13 ausgebildeter Taster. Die Führung 12 ist mechanisch mit einer zweiten, an der zur Bearbeitung des Rohlings ein als rotierende Schleifscheibe gleicher Abmessung wie die Scheibe 13 ausgebildetes Bearbeitungswerkzeug geführt ist, derart verbunden, dass beide Scheiben analoge Bewegungen ausführen (nicht dargestellt). Für die Einzelheiten der mechanischen Verbindungen zwischen Taster und Bearbeitungswerkzeug einerseits und den Halterungen von Formkörper und Rohling andererseits wird auf die in der Einleitung genannte Anmeldung verwiesen.

Erfindungsgemäss ist die Scheibe 13 mit einem radialen Schlitz 14 versehen, dessen Breite etwas grösser ist als der Durchmesser der Endpartie des zweiten Halteteils 9. Seine Tiefe muss mindestens der Hälfte dieses Durchmessers entsprechen, ist aber vorzugsweise grösser.

Ein abzutastender Formkörper 11 wird, nachdem das erste Halteteil 2 mittels des Griffs 5 gegen die Kraft der Feder 4 zurückgezogen wurde, zwischen dasselbe und das zweite Halteteil 9 gespannt. Dabei sorgen die beiden voneinander beabstandeten Endteile 10a,b des ersten Halteteils 2, deren Spitzen leicht in den Formkörper 11 eindringen, dafür, dass derselbe gegenüber dem ersten Halteteil 2 nicht verdreht werden kann. Da das zweite Halteteil 9 drehbar gelagert ist, behindert es, obwohl es auch zwei allerdings nur knapp beabstandete Berührungspunkte mit dem Formkörper 11 hatseine beiden Spitzen dringen ebenfalls etwas in denselben ein - eine demselben durch das erste Halteteil 2 aufgeprägte Drehung nicht. Ausser durch eine Drehung des ersten Halteteils 2 um seine Achse, die über die Kegelzahnräder 6a,b und die Welle 7 auf die Halterung des Rohlings übertragen wird, kann der Formkörper 11 auch durch eine Rotationsbewegung des Arms 1 um eine zur ersten Drehachse normale Drehachse geschwenkt werden. Die Scheibe 13 kann praktisch frei bewegt werden.

Bei Abtastung mit einer Vollscheibe wäre das zweite Halteteil 9 bei der Abtastung der Oberseite im Weg und ein Teil der Oberfläche des Formkörpers 11 müsste von der Abtastung ausgespart werden. Bei einem stiftförmigen Taster wäre dieses Problem etwas entschärft, da die unzugängliche Fläche dann i. a. kleiner wäre. Für die Herstellung von Kopien des Formkörpers eignen sich jedoch stiftförmige Bearbeitungswerkzeuge weniger gut, da mit ihnen nur eine geringere Bearbeitungsgeschwindigkeit erreichbar und ausserdem ihre Standzeit geringer ist. Da die Form des Tasters jedoch wenigstens dort, wo derselbe mit dem Formkörper in Berührung kommt, der Form des Bearbeitungswerkzeugs entsprechen muss, soll mit einem Taster allgemeinerer Form eine möglichst vollständige Abtastung der relevanten Teile des Formkörpers 11 erreicht werden. Das wird durch den Schlitz 14 ermöglicht, indem die Abtastung des dem zweiten Halteteil 9 zugewandten Teils der Oberfläche des Formkörpers 11 so erfolgt, dass der Schlitz 14 gegen den zweiten Halteteil 9 gerichtet wird und bei weiterer Bewegung der Scheibe 13 auf denselben zu in besagten Schlitz aufgenommen wird, sodass die Bereiche, die das unmittelbar im Kontaktbereich zwischen dem zweiten Halteteil 9 und dem Formkörper 11 liegende Gebiet, dessen direkte Abtastung nicht möglich ist, umgeben, praktisch ohne Einschränkung abgetastet werden können. Was das besagte Kontaktgebiet betrifft, so ergibt sich für dasselbe automatisch eine Interpolation über die unmittelbare Umgebung, die die direkte Abtastung ersetzt. Falls es keine allzu grosse Krümmung aufweist - worauf man beim Einspannen des Formkörpers 11 achten wird - ist auf diese Weise eine durchwegs äusserst genaue Abtastung erreichbar.

Es sei noch erwähnt, dass sich erfindungsgemässe Abtastvorrichtungen keineswegs nur für den Gebrauch in Kopiervorrichtungen der beschriebenen Art eignen, sondern allgemein zur Bestimmung einer Raumform, z. B. zwecks Speicherung mit elektronischen Mitteln zu späterer Anfertigung von Kopien oder zu anderen Zwecken.

## Patentansprüche

1. Abtastvorrichtung zum Abtasten eines Formkörpers (11), welche mindestens einen ersten Halteteil (2) zur Halterung des Formkörpers (11) aufweist sowie einen Taster mit einer einer Kreislinie folgenden Kante, die ein ebenes Flächenstück begrenzt, welche Abtastvorrichtung zur Fixierung des Formkörpers (11) einen gegen den ersten Halteteil (2) ragenden zweiten Halteteil (9) aufweist, während die Kante des Tasters auf einer Strecke, welche mindestens einem ersten Durchmesser des zweiten Halteteils (9) entspricht, durch eine Aussparung im Tastkörper unterbrochen ist, die eine Tiefe von mindestens der Hälfte des zum ersten Durchmesser des zweiten Halteteils (9) diametralen Durchmessers aufweist.

2. Abtastvorrichtung nach Anspruch 1, **dadurch gekennzeichnet, dass** der Taster eine im Mittelpunkt gehalterte Scheibe (13) und die Aussparung als radialer Schlitz (14) ausgebildet ist.

3. Abtastvorrichtung nach Anspruch 1 oder 2, **dadurch gekennzeichnet, dass** das zweite Halteteil (9) an seinem zur Kontaktierung des Formkörpers (11) bestimmten Ende in mindestens zwei Spitzen ausläuft und drehbar gelagert ist.

4. Abtastvorrichtung nach einem der Ansprüche 1 bis 3, **dadurch gekennzeichnet, dass** das erste Halteteil (2) zwei jeweils eine Spitze aufweisende Endstücke (10a, 10b) zur Kontaktierung des Formkörpers (11) aufweist.

5. Abtastvorrichtung nach einem der Ansprüche 1 bis 4, **dadurch gekennzeichnet, dass** eines der Halteteile so gelagert ist, dass es gegen die Kraft einer Feder (4) vom Formkörper (11) zurückziehbar ist.

6. Verwendung der Abtastvorrichtung nach einem der Ansprüche 1 bis 5 zum mindestens teilweisen Kopieren eines Formkörpers (11), wobei der Taster der Oberfläche des Formkörpers (11) entlanggeführt wird und ein Rohling mittels eines analoge Bewegungen ausführenden rotierenden Bearbeitungswerkzeugs bearbeitet wird, und das Bearbeitungswerkzeug als Rotationskörper ausgebildet ist, der durch eine zu seiner Achse normale ebene Fläche abgeschlossen ist, deren Radius demjenigen der Kreislinie entspricht, welcher die Kante das Tasters folgt.

7. Verwendung nach Anspruch 6, **dadurch gekennzeichnet, dass** das Bearbeitungswerkzeug als Scheibe ausgebildet ist.

## Claims

1. Scanning device, for scanning a contoured body (11), which has at least one first holding part (2) for holding the contoured body (11) as well as a feeler having an edge following a circular line which bounds a flat surface element, which scanning device has a second holding part (9) projecting towards the first holding part (2) for fixing the contoured body (11) in position, whilst the edge of the feeler is interrupted over a distance which corresponds at least to a first diameter of the second holding part (9), by a recess in the feeler body which has a depth of at least half the diameter diametrically opposite the first diameter of the second holding part (9).

2. Scanning device according to claim 1, characterised in that the feeler is a disc (13) held at the centre, and the recess is formed as a radial slot (14).

3. Scanning device according to claim 1 or 2, characterised in that the second holding part (9), at the end intended for contact with the contoured body (11), tapers off to at least two points and is rotatably mounted.

4. Scanning device according to one of claims 1 to 3, characterised in that the first holding part (2) has two end portions (10a, 10b), each having one point, for contact with the contoured body (11).

5. Scanning device according to one of claims 1 to 4, characterised in that one of the holding parts is mounted so that it can be withdrawn from the contoured body (11) against the force of a spring (4).

6. Application of the scanning device according to one of claims 1 to 5 to the copying, at least partially, of a contoured body (11), the feeler being guided along the surface of the contoured body (11) and a blank being machined by means of a rotary machining tool carrying out similar movements, where the machining tool is formed as a body of revolution which is closed by a flat surface normal to its axis, the radius of which flat surface corresponds to that of the circle which is followed by the edge of the feeler.

7. Application according to claim 6, characterised in that the machining tool is formed as a disc.

## Revendications

1. Dispositif palpeur pour le palpage d'un corps moulé (11), qui présente au moins une première pièce de support (2) pour la fixation du corps moulé (11) ainsi qu'un palpeur comprenant un bord suivant une ligne circulaire, qui délimite un morceau de surface plane, dispositif qui, pour la fixation du corps moulé (11), présente une seconde pièce de support (9) faisant saillie contre la première pièce de support (2), le bord du palpeur étant interrompu sur une distance qui correspond au moins à un premier diamètre de la seconde pièce de support (9) par un évidement dans le corps palpeur, évidement qui présente une profondeur d'au moins la moitié du diamètre diamètralement opposé au premier diamètre de la seconde pièce de support (9).

2. Dispositif palpeur selon la revendication 1, caractérisé en ce que le palpeur est un disque (13) maintenu en son milieu et que l'évidement est conformé comme une fente radiale (14).

3. Dispositif palpeur selon la revendication 1 ou 2, caractérisé en ce que la seconde pièce de support (9) se termine, à son extrémité destinée à entrer en contact avec le corps moulé (11), au moins en deux pointes et est logée de manière rotative.

4. Dispositif palpeur selon l'une des revendications 1 à 3, caractérisé en ce que la première pièce de support (2) présente deux extrémités (10a, 10b) comportant chacune une pointe pour l'entrée en contact avec le corps moulé (11).

5. Dispositif palpeur selon l'une des revendications 1 à 4, caractérisé en ce que l'une des pièces de support est logée de manière à être retirée du corps moulé (11) contre la force d'un ressort (4).

6. Utilisation du dispositif palpeur selon l'une des revendications 1 à 5 pour le copiage au moins partiel d'un corps moulé (11), en guidant le palpeur le long de la surface du corps moulé (11) et en façonnant une ébauche à l'aide d'un outil de façonnage tournant exécutant des déplacements analogues, où l'outil de façonnage est conçu comme un corps rotatif, qui est fermé par une surface plane normale par rapport à son axe dont le rayon correspond à celui de la ligne circulaire que suit le bord du palpeur.

7. Utilisation selon la revendication 6, caractérisée en ce que l'outil de façonnage est conçu comme un disque.
